# EUROPEAN PATENT APPLICATION

(11) **EP 2 105 781 A1**
(43) Date of publication of application: **30.09.2009**
(21) Application number: 07860569.8
(22) Date of filing: 26.12.2007
(51) Int. Cl.: G02B 27/02, H04N 5/64

(54) **HEAD MOUNT DISPLAY**

(30) Priority: 28.12.2006 JP 2006356408
(71) Applicant: Scalar Corporation, Shinjuku-ku Tokyo 160-0023 (JP)
(72) Inventor: YAMAMOTO, Masao, Tokyo 160-0023 (JP)
(74) Representative: Skone James, Robert Edmund
(86) International application number: PCT/JP2007/075374
(87) International publication number: WO 2008/081973

(57) **Abstract**

Provided is a head mount display of a type to be attached to eyeglasses. A head mount display (1) is provided with a case (10) incorporating displays, and free-form surface prisms (20). The head mount display (1) is used while the case (10) is attached to a bridge (105) of eyeglasses (100). When a user wears the eyeglasses (100), the case (10) incorporating displays and the free-form surface prisms (20) are connected to each other while aligning in a lateral direction as seen from the user.

## Description

### Technical Field

The present invention relates to a head mount display used while being mounted to a user's head.

### Background Art

A head mount display, which is mounted to a part of a body such as a head during use, for displaying an image in front of the user's eyes, is used in various fields for displaying an image, which includes a field of virtual reality. Generally, the head mount display is formed into a goggle-like shape or into a large eyeglass-frame shape. Further, there is also available a head mount display of a type of being used while being attached to an attachment member having an eyeglass-frame shape (hereinafter, referred to as "attachment-type head mount display (HMD)").

Generally, it is preferred that the head mount display be as small as possible. In particular, the head mount display excellent in design has a size and a shape which are less bothersome for a user when being attached to the user's head.

The attachment-type HMD allows, even during attachment of the head mount display, a user to see a landscape in addition to the image displayed on the head mount display. A head mount display having a smaller size can secure a field of view of a landscape, and hence it is more conveniently used by the user.

The attachment-type HMD includes a display mechanism provided with displays on upper parts of rims of the attachment member, and an image output from the display mechanism comes into sight of the user's eye through light guide means for enlarging the image by a predetermined magnification. Normally, the light guide means are provided at positions corresponding to eyeglass lenses of the attachment member. With use of the light guide means, the image is displayed substantially in front of the user's eyes. The display mechanism and the light guide means are connected to each other so as to align in the fore-and-aft direction when the user wears the attachment member. With this configuration, the display mechanism is protrudingly provided on the upper part of the attachment member, and hence it is difficult to say that the design thereof are excellent.

Under the circumstance, various measures for downsizing the head mount display have been made.

For example, in order to downsize the head mount display, there has been provided a head mount display of Patent Document 1 in which free-form surface prisms are used. The head mount display of Patent Document 1 is provided with displays for displaying images and free-form surface prisms for guiding the light from the displays to the user's eyes.
[Patent Document 1] JP 2001-133724 A

When the head mount display disclosed in Patent Document 1 is directly used in an attachment-type HMD and the displays and the free-form surface prisms are attached to the attachment member, the displays are provided on the upper parts of the rims and the free-form surface prisms are provided in front of the eyeglass lenses located on lower parts of the rims. (In this specification, when the user wears the attachment member, the user side of the attachment member is referred to as "rear" and the side opposite thereto is referred to as "front.") Also with this configuration, the displays and the free-form surface prisms are connected to each other so as to align in the fore-and-aft direction when the user wears the attachment member.

Thus, even when the head mount display of Patent Document 1 is applied to the attachment-type HMD, the problem that the display mechanism is protrudinglyprovided on the upper part of the attachment member remains unsolved.

Further, when the displays are located on the upper parts of the rims, the displays are still present in the field of view even when the user looks upward during wearing the head mount display. Thus, the problem of poor visibility also arises.

The present invention has been made for solving those problems, and it is therefore an object of the present invention to provide a technology for downsizing a head mount display of a type of being attached to an attachment member such as eyeglasses.

### Disclosure of the Invention

In order to solve the above-mentioned problems, a head mount display of the present invention, which is used while being attached to an attachment member having an eyeglass shape, is provided with: a display means for displaying an image; and a light guide means for guiding the image displayed by the display means and enlarged by a predetermined magnification to an eye of a user. In the head mount display, the display means and the light guide means are connected to each other while aligning in a lateral direction as seen from the user wearing the attachment member.

Unlike the conventional cases, in the head mount display of the present invention, the display means and the light guide means align in the lateral direction during use as seen from the user. Therefore, the above-mentioned conventional problems caused by fore-and-aft alignment are solved. That is, the image projecting position of the light guide means is normally located close to the eye of the user, and the light guide means is provided at a position of each eyeglass lens when the attachment member is eyeglasses. The display means is provided while aligning in the lateral direction of the light guide means, and hence the display means is not provided on each of the upper parts of rims of an eyeglass frame. Thus, it is possible to avoid the situation that the display means is protrudingly provided on the upper part of the attachment member. The above-mentioned outward appearance of the head mount display during use is excellent in design, and it is possible to secure the upper field of view of the user.

The display means is attached, for example, between positions corresponding to those of eyeglass lenses of the attachment member. Attachment in this manner enables provision of the display means between both eyes of the user, whereby the display means completely disappears from the field of view of the user.

The display means may be attached on any of the front and rear of the attachment member. However, when the displaymeans is attached on the rear of the attachment member, that is, attached thereto so as to be situated on a side of the user with respect to the attachment member when the user wears the attachment member, the display means can be hidden with the attachment member during use. With this, the outward appearance is further enhanced.

Examples of the available light guide means include a free-form surface prism in which the image is reflected therein by a predetermined number of times so as to be guided to the eye of the user. With use of the free-form surface prism, it is possible to easily achieve downsizing of the whole of the head mount display. Further, the light guide means is not limited to the free-form surface prism, and can be further downsized while maintaining the function of a light guide path for leading the image and a lens for enlarging the image even when being provided therewith. The light guide path may reflect the image by a predetermined number of times.

The head mount display as described above may be provided with a movement mechanism for sliding the display means and the light guide means between end pieces and the bridge of the attachment member. With the provision of the movement mechanism, a position of the image output from the light guide means is variable. Thus, the image can be provided at the optimum position for the eye of the user.

The above-mentioned movement mechanism may include a rack having one end connected to the display means, and a pinion capable of being manipulated by the user. Rotation of the pinion causes the rack to be slid so as to slide the display means and the light guide means.

Further, the head mount display may further include an adjustment mechanism for enabling the display means to move in a direction of the light guide means. With this configuration, by optimizing the distance between the display means and the light guide means in accordance with the user's eyesight, it is possible to provide an image subjected to eyesight correction to the user.

Another head mount display of the present invention includes: a display means for displaying an image; a light guide means for guiding the image displayed by the display means and enlarged by a predetermined magnification to an eye of a user; and an attachment member having an eyeglass shape, in which: the display means is attached between positions corresponding to those of eyeglass lenses of the attachment member; and, the display means and the light guide means are connected to each otherwhile aligning in a lateral direction as seen from the user wearing the attachment member.

### Brief Description of the Drawings

FIG. 1 is a view of a state in which a head mount display according to the embodiment of the present invention is attached to eyeglasses.
FIG. 2 is an explanatory view of an attachment method for the head mount display to the eyeglasses.
FIG. 3 is a top view of a case.
FIG. 4 is a partial sectional view of an inner structure of the case.
FIG. 5 is an explanatory view of an operation of a movement mechanism.
FIG. 6 is a detailed structural view an adjustment mechanism.
FIG. 7 is an explanatory view of an operation of the adjustment mechanism.
FIG. 8 is an explanatory view of a light guide path in a free-form surface prism.
FIG. 9 is a rear view of the head mount display according to the embodiment of the present invention.
FIG. 10a is a front view the eyeglasses in a state of being attached with the head mount display according to the embodiment of the present invention.
FIG. 10b is a front view the eyeglasses in a state of being attached with the head mount display according to the embodiment of the present invention.
FIG. 11 is a structural view of a modification of the free-form surface prism of the present invention.
FIG. 12 is a structural view of a modification of the free-form surface prism of the present invention.

### Best Mode for carrying out the Invention

In the following, a preferred embodiment of the present invention is described in detail with reference to figures.

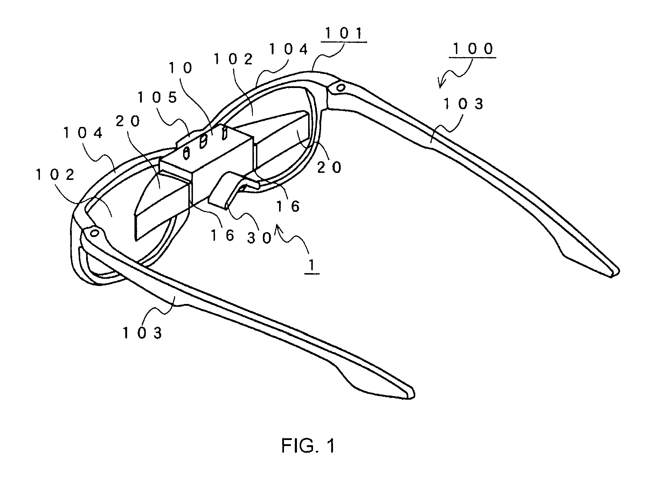

A head mount display 1 in this embodiment is an attachment-type HMD used while being attached to eyeglasses 100 having an eyeglass frame shape as illustrated in FIG. 1. In this embodiment, the head mount display 1 is attached on the rear of the eyeglasses 100. During use, the head mount display 1 is situated between a user and the eyeglasses 100. Therefore, those other than the user are less likely to find the presence of the head mount display 1. Note that, even when the head mount display 1 is provided in front of the eyeglasses 100, effects realized by the present invention are not prevented.

The eyeglasses 100 has the same structure as that of conventional pairs of eyeglasses, in which eyeglass lenses 102 are fitted to an eyeglass frame 101. The eyeglass frame 101 is provided with left and right temples 103, left and right rims 104, and a bridge 105 for coupling the left and right rims 104 with each other. The left and right temples 103 are respectively hinged to the left and right rims 104 so that the temples 103 can be folded in a direction parallel to the rims 104. By respectively fitting leading ends of the temples 103 to both ears of the user or by sandwiching the head of the user with the two temples 103, the eyeglasses 100 are fixed to the head of the user.

In this embodiment, the head mount display 1 is situated on the rear of the eyeglasses 100, and hence the temples 103 are somewhat larger in length than those of the conventional eyeglass frames. Further, while the leading ends of the temples 103 may be formed so as to easily fit to the user's ears, a linear shape is less likely to influence the user's sense of use regardless of the presence and absence of the head mount display 1.

The head mount display 1 is provided with a case 10 having displays therein, left and right free-form surface prisms 20 connected to the case 10 through an intermediation of movable parts 16, and a nose pad 30 connected to the case 10.

The case 10 is attached to the bridge 105 of the eyeglasses 100 while being situated on the rear of the eyeglasses 100. When the user wears the eyeglasses 100, the free-form surface prisms 20 are connected to the case 10 while aligning in the lateral direction of the case 10 as seen from the user. The nose pad 30 is attached to the case 10 so as to be situated further rearward with respect to the case 10. The images displayed on the displays are enlarged by the free-form surface prisms 20 at a predetermined magnification, and are output rearward from the free-form surface prisms 20. The images output rearward consequently come into sight of the user wearing the eyeglasses 100. The images are output, for example, from the regions of the free-form surface prisms 20, which are surrounded by dotted lines.

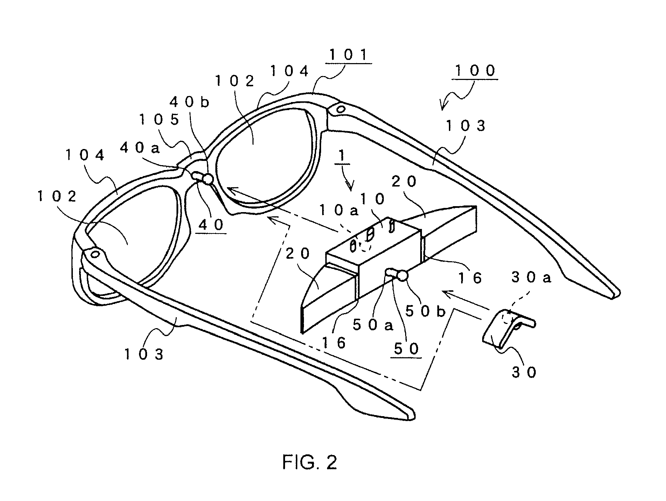

As illustrated in FIG. 2, the head mount display 1 is attached to the eyeglasses 100. A first attachment member 40 is formed on the bridge 105 of the eyeglasses 100. In this embodiment, the first attachment member 40 is constituted by a first shaft part 40a connected to the bridge 105 and a first ball part 40b provided at a leading end of the first shaft part 40a. The first attachment member 40 may be formed integrally with the eyeglasses 100. However, in order to use general eyeglass frames for the eyeglasses 100, it would be better to form the first attachment member 40 as a separate member so as to be attached to the eyeglasses 100 by adhesive or the like.

The case 10 of the head mount display 1 has a first fitting hole 10a which is formed in a surface of the eyeglasses 100 side thereof. At the time of attachment to the eyeglasses 100, the first ball part 40b of the first attachment member 40 is fitted into the first fitting hole 10a, that is, a ball joint is constituted.

Further, in a surface opposite to the surface in which the first fitting hole 10a of the case 10 is formed, there is formed a second attachment member 50 of the same configuration and size as that of the first attachment member 40. The second attachment member 50 is constituted by a second shaft part 50a connected to the case 10 and a second ball part 50b provided at a leading end of the second shaft part 50a. The second attachment member 50 may be formed integrally with the case 10, or may be attached to the case 10 by adhesive or the like.

In a part of the nose pad 30, which is connected to the case 10, there is formed a second fitting hole 30a. The second fitting hole 30a has the same size as that of the first fitting hole 10a. At the time of attachment to the case 10, the second ball part 50b of the second attachment member 50 is fitted into the second fitting hole 30a, that is, a ball joint is constituted.

The first attachment member 40 and the second attachment member 50, and the first fitting hole 10a and the second fitting hole 30a are formed to have the same shapes and sizes, respectively. Therefore, it is also possible to fit the first attachment member 40 into the second fitting hole 30a. With this, it is also possible to omit the case 10, the movable parts 16, and the free-form surface prisms 20, and possible to directly attach only the nose pad 30 to the eyeglasses 100 so as to use the same as a usual eyeglass frame.

Next, detailed description is made on the head mount display 1.

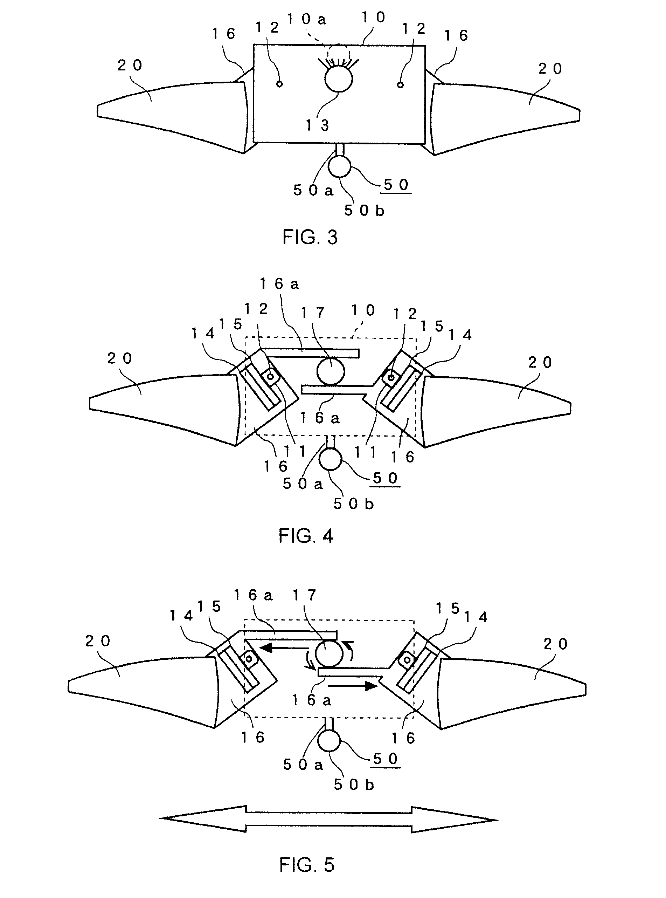

FIG. 3 is a view in which the head mount display 1 is seen from the upper side of FIG. 1.

The case 10 is hollow and substantially rectangular. While the case 10 is made of a resin in this embodiment, this should not be construed restrictively. On a top surface of the case 10, there are provided eyesight adjustment knobs 12 for adjusting eyesight and a prism position adjustment knob 13 for adjusting the positions of the free-form surface prisms 20.

Through the operation of the eyesight adjustment knob 12, the display in the case 10 is advanced and retracted in the optical axis direction of the image. In this embodiment, two eyesight adjustment knobs 12 are provided so that eyesight of the respective left and right eyes can be adjusted.

Through the operation of the prism position adjustment knob 13, the positions of the free-form surface prisms 20 with respect to the case 10 are moved within a predetermined range. Scales are provided in the vicinity of the prism position adjustment knob 13 so as to allow intuitive confirmation of the movement amount of the free-form surface prisms 20 in accordance with the operation amount of the prism position adjustment knob 13.

FIG. 4 is a partial sectional view of the inside of the case 10, in which the case 10 is viewed from the upper surface thereof.

In the case 10, there are provided the eyesight adjustment knobs 12, eyesight adjustment plates 11, displays 14, control boards 15, the movable parts 16 incorporating the eyesight adjustment knobs 12, the eyesight adjustment plates 11, the displays 14, and the control boards 15 and coupled with the free-form surface prisms 30, and a pinion part 17.

In this embodiment, while description has been made on the premise that there are provided two movable parts 16 and two free-form surface prisms 30, this should not be construed restrictively. For example, one movable part 16 and one free-form surface prism 20 may be provided. That is, there may be adopted a structure for only one of the right eye and the left eye instead of that for both eyes.

The displays 14 are provided for displaying images. In this embodiment, rectangular liquid crystal displays are provided. When a user wears the eyeglasses 100, the shorter-side direction of the displays 14 corresponds to the fore-and-aft direction as seen from the user. The displays 14 are attached to the movable parts 16 such that an image is incident at a predetermined angle onto one surface of each of the free-form surface prisms 20.

The control boards 15 are provided for obtaining data of images from an external device (not shown) by a wired or wireless means, processing the data, and sending the processing result to the displays 14. In this manner, images are displayed on the displays 14.

Examples of the available external device may include a hard-disc player, a DVD player, a TV broadcasting tuner, a personal computer, a mobile phone, a game device for executing computer games, and an MP3 player provided with an image processing function.

The movable parts 16 are arranged such that the image displayed on each of the displays 14 is incident at a predetermined angle onto one surface of each of the free-form surface prisms 20. The movable parts 16 supports the free-form surface prisms 20 such that, when the displays 14 display the images, the light of the images is sent to the free-form surface prisms 20.

The movable parts 16 are provided with rack parts 16a so as to allow contact with the pinion part 17. Each of the rack parts 16a is provided with teeth on the surface facing the pinion part 17.

The pinion part 17 is coupled with the prism position adjustment knob 13, and the pinion part 17 is rotated in accordance with the rotation of the prism position adjustment knob 13. The pinion part 17 has a columnar shape, and is provided with teeth on the side surface thereof parallel to the axial direction of the column. The teeth of the pinion part 17 and the teeth of the rack parts 16a mesh with each other, and hence the rack parts 16a move in accordance with the rotation of the pinion part 17.

That is, as illustrated in FIG. 5, when the prism position adjustment knob 13 is rotated counterclockwise, the proximal ends of the rack parts 16a move in a direction of being separated from the pinion part 17, and hence the two movable parts 16 are slid in a direction of being separated from each other. In contrast, when the prism position adjustment knob 13 is rotated clockwise, the proximal ends of the rack parts 16a move toward the pinion part 17, and hence the two movable parts 16 are slid in a direction of coming close to each other. The movable parts 16 and the free-form surface prisms 20 are coupled with each other, and hence, in accordance with the sliding of the movable parts 16, the free-form surface prisms 20 are similarly slid. As described above, with the rotation of the prism position adjustment knob 13, when the case 10 is attached to the eyeglasses 100, the free-form surface prisms 20 attached to the movable parts 16 can be slid between the bridge 105 and end pieces of the eyeglasses 100. In accordance with the sliding of the free-form surface prisms 20, the positions of the images output from the free-form surface prisms 20 are slid. With this, the positions of outputting the images can be adjusted to the positions of the user's eyes.

Note that, the pinion part 17 may be constituted integrally with the prism position adjustment knob 13. The rack parts 16a and the pinion part 17 constitute a movement mechanism for sliding the free-form surface prisms 20 between end pieces and the bridge 105.

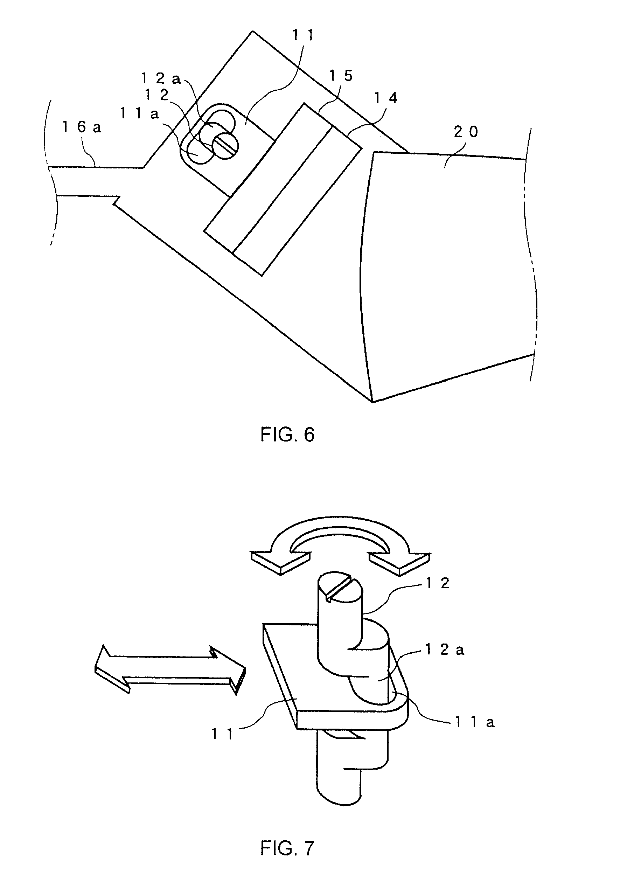

The eyesight adjustment knobs 12 and the eyesight adjustment plates 11, which are incorporated in the movable parts 16, constitute an adjustment mechanism for providing images in accordance with the user's eyesight by fluctuating the distances between the displays 14 and the free-form surface prisms 20. FIG. 6 is a view for describing the adjustment mechanism in detail by enlarging one of the movable parts 16. FIG. 7 is a view describing the operation of the adjustment mechanism.

Each of the eyesight adjustment knobs 12 is provided with a groove in a head portion thereof protruding toward the outside of the case 10, and has a crank part 12a formed by bending the midway of each of the eyesight adjustment knob 12. When a flat plate is inserted into the groove, and then rotated, the crank part 12a is rotated about the rotation center.

Eachof the eyesight adjustment plates 11 has one side connected to each of the control boards 15, and is provided with a chamfered rectangular adjustment hole 11a in the vicinity of the side opposed to the one side. The adjustment hole 11a has longer sides which extend in the same direction as that of the one side of each of the eyesight adjustment plates 11. The crank part 12a of each of the eyesight adjustment knobs 12 passes through the adjustment hole 11a. Shorter sides of the adjustment hole 11a are formed to have a length in accordance with the size of the crank part 12a.

When each of the eyesight adjustment knobs 12 is rotated in the state of FIG. 7, the crank part 12a is rotated about the rotation center. The crank part 12a is passed through the adjustment hole 11a, and hence, when the crank part 12a is rotated, the adjustment hole 11a is urged in the direction of each of the control boards 15 in accordance with the movement of the crank part 12a. Therefore, the eyesight adjustment plates 11 move in the direction of urging the control boards 15. The control boards 15 move, and hence the displays 14 move in the directions of the free-form surface prisms 20. By fluctuating the distances between the displays 14 and the free-form surface prisms 20, it is possible to adjust eyesight.

The eyesight adjustment knobs 12 are rotated, and hence the eyesight adjustment plates 11 exhibit piston-like movement. Thus, it is impossible for the displays 14 to excessively move so as to collide against the free-form surface prisms 20, to thereby suffer breakage. A user can adjust the displays 14 to the positions optimum for the eyesight of the user's eyes by turning the eyesight adjustment knobs 12 during use.

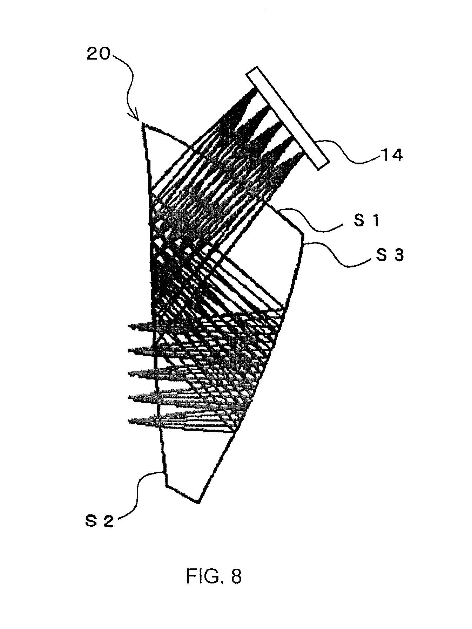

FIG. 8 is a view for describing a light guide path of each of the free-form surface prisms 20. Each of the free-form surface prism 20 is provided for guiding light from each of the displays 14 to at least one of user's eyes and enlarging the images displayed on each of the displays 14.

Each of the free-form surface prisms 20 has a shape substantially triangular in cross-section, that is, has three surfaces constituted by a first surface S1, a second surface S2, and a third surface S3, which are respectively free-form surfaces.

The first surface S1 is faced with each of the displays 14 so as to transmit the light of the image displayed on each of the displays 14 and to guide the same into the inside of each of the free-form surface prisms 20, the light being emitted from each of the displays 14. The light from each of the displays 14 is refracted at the time of passing through the first surface S1 and varies so as to enlarge the image displayed on each of the displays 14.

The second surface S2 reflects (normally, totally reflects) the light having passed through the first surface S1. The light having passed through the first surface S1 is reflected by the second surface S2 so as to greatly change in direction, and varies so as to enlarge the image displayed on each of the displays 14. The second surface S2 also transmits the light reflected by the third surface S3. Description thereof is made in the following.

The third surface S3 reflects the light reflected by the second surface S2. The light reflected by the second surface S2 is reflected by the third surface S3 so as to greatly change in direction, and varies so as to enlarge the image displayed on each of the displays 14. Note that, the reflection performed on the third surface S3 may be total reflection or reflection by metal. When the reflection performed on the third surface S3 is the total reflection, the curved surface of the third surface S3 is designed such that an incident angle in the case where the light reflected by the second surface S2 reaches the third surface S3 is equal to or lower than the total-reflection angle. When the reflection performed on the third surface S3 is the reflection performed by metal, metal is caused to adhere to the outer side of the third surface S3, for example, by deposition. Note that, instead of causing metal to adhere to the outer side of the third surface S3, a dielectric multilayer filmmay be formed thereon. The reflection in this case is performed by the dielectric multilayer film.

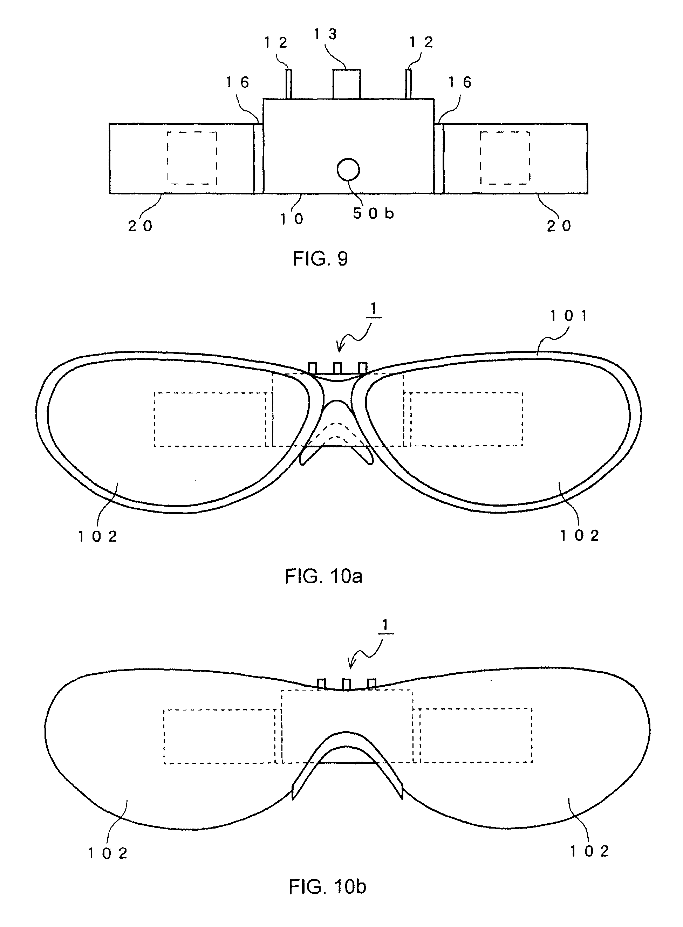

The light reflected by the third surface S3 as described above is re-directed to the second surface S2 so as to pass through the second surface S2. The light passing through the second surface S2 is refracted at the time of passing through the second surface S2 and varies so as to enlarge the image displayed on each of the displays 14. As illustrated in FIG. 9, the image displayed on each of the displays 14 is to be displayed in the dotted line portion of each of the free-form surface prisms 20.

When the case 10 is attached to the eyeglasses 100, at least a part of the free-form surface prisms 20 as described above is situated in front of one of the user's eyes during use of the head mount display 1, and is connected to the case 10 so as to emit light from the displays 14 into the user's eyes.

The free-form surface prisms 20 are arranged while being connected to the case 10 not in the fore-and-aft direction but in the lateral direction as seen from the user wearing the eyeglasses 100. That is, the entire shape of the head mount display 1 extends in the lateral direction.

FIGS. 10a and 10b illustrate respectively the eyeglasses 100 attached with the head mount display 1 as seen from the front thereof.

As illustrated in those figures, when the eyeglasses 100 attached with the head mount display 1 are seen from the front thereof, the head mount display 1 substantially hide in the rear of the eyeglass lenses 102.

In the head mount display 1 in this embodiment, the main body 10 is connected to the free-form surface prisms 20 while aligning in the lateral direction. When the case 10 is attached on the rear of the eyeglasses 100, it is possible to cause almost all the head mount display 1 to be invisible from the front of the eyeglasses 100. That is, it is possible to minimize a protruding amount of the head mount display 1 from the eyeglasses 100, which does not involve deterioration in design.

Further, the head mount display 1 in this embodiment does not obstruct the user's view in the upper and lower directions, and hence, even in the state of watching the images displayed on the free-form surface prisms 20, the peripheries of the free-form surface prisms 20 are visible although being blurred to some extent. Therefore, it is convenient because simple tasks can be performed even in the state in which eyes are focused on the free-form surface prisms 20. Further, it is safe because steps are visible even in the state in which eyes are focused on the free-form surface prisms 20. In addition, when eyes are averted from the free-form surface prisms 20, the peripheries become more visible.

Next, description is made on how to use the head mount display 1.

When the head mount display 1 is to be used, the eyeglasses 100 to which the head mount display 1 is attached are fixed to the user's head. As described above, the fixation to the user's head of the eyeglasses 100 to which the head mount display 1 is attached is performed by fitting the temples of the eyeglasses 100 to the user's ears or by sandwiching the user's head with the temples of the display 100.

In this state, the user operates the above-mentioned external device so as to input the data of the images to be displayed on the head mount display 1 to the head mount display 1. The control boards 15 display the images on the displays 14 based on the data of the images.

The light of the image displayed on each of the displays 14 exits each of the displays 14 so as to be input to the first surface S1 of each of the free-formsurfaceprisms 20. In each of the free-form surface prisms 20, as illustrated in FIG. 8, the light is emitted from the second surface S2. Owing to the light emitted therefrom, the user watches image set to have an appropriate size with both eyes of the user.

In this case, through manipulation of the eyesight adjustment knobs 12, the user can bring the displays 14 closer to and keep the same away from the free-form surface prisms 20 such that an incident angle of the light from the displays 14 to the free-form surface prisms 20 is not be changed. That is, the displays 14 can be advanced and retracted in the projecting direction of the images on the displays 14. With this, it is possible to perform adjustment such that an image in accordance with the user's eyesight can be displayed.

Further, through manipulation of the prism position adjustment knob 13, the user can move the displays 14 to the positions suitable to the positions of the user's eyes. In this manner, it is possible to appropriately adjust the positions of the displays 14.

Further, by wearing earphones (not shown), the user can listen to music matching the image.

Note that, description in this embodiment has been made on the premise that the case 10 is attached to substantially the center of the bridge 105 of the eyeglasses 100. However, this should not be construed restrictively. The case 10 may be attached to another part of the eyeglasses 100.

Further, as an example of the light guide means of the present invention, the free-form surface prisms 20 each having a substantially triangular shape in cross-section are described in this embodiment. However, any configuration may be adopted as long as at least a part of the free-form surface prisms 20 is positioned in front of at least one of the user's eyes during use of the head mount display 1, the light from each of the displays 14 is guided to at least one of the user's eyes, and the images displayed on the displays 14 are enlarged.

For example, there may be adopted a free-form surface prism provided with four surfaces constituted by a first surface, a second surface, a third surface, and a fourth surface, in which the light from each of the displays 14 is passed through the first surface, the light having passed through the first surface is reflected by the second surface, the light having reflected by the second surface is reflected by the third surface, and the light having reflected by the third surface is reflected by the fourth surface, thereby changing the direction of the light guided into the inside thereof, and enlarging the image displayed on each of the displays 14.

While the first through fourth surfaces may not be continuous with each other, at least two of the first through fourth surfaces may be smoothly continuous with each other so as to constitute one surface. Note that, in this embodiment, the second surface and the fourth surface are smoothly continuous with each other so as to constitute one surface.

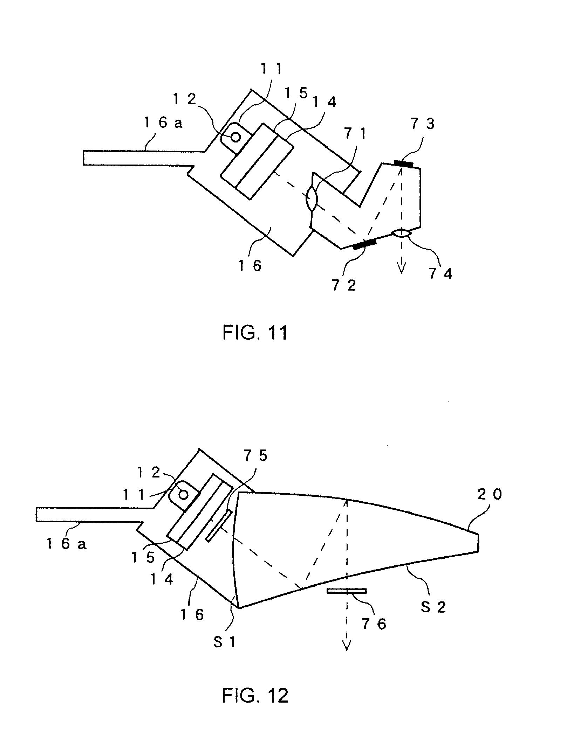

Further, as illustrated in FIG. 11, the light guide means of the present invention may include a first lens 71 for enlarging an image from each of the displays 14, a first reflecting mirror 72 for reflecting the light from the first lens 71 and changing the direction of the light, a second reflecting mirror 73 for reflecting the light reflected by the first reflecting mirror 72 and changing the direction of the light, and a second lens 74 for transmitting the light from the second reflecting mirror 73 and enlarging the image. The number of reflections and the enlargement degree of the image are determined based on the positional relation between the displays 14 and the user's eyes.

Further, as illustrated in FIG. 12, the light guide means may be provided with the free-form surface prism 20 and at least one of the lens 75 and the lens 76. The lenses 75 and 76 are provided for enlarging the image displayed on the display 14. While description has been made on the premise that those lenses 75 and 76 are plate-like lenses, this should not be construed restrictively. Any component may be adopted as long as functioning as a lens for partially changing the refractive index.

The lens 75 is attached somewhere between the display 14 and the first surface S1 of the free-form surface prism 20 so that the light from the display 14 is input to the first surface S1 of the free-form surface prism 20 through the lens 75. The light passing through the lens 75 is refracted at the time of passing therethrough, and is changed such that the image displayed on the display 14 is enlarged. That is, with use of the lens 75, the image displayed on the display 14 can be enlarged prior to incidence onto the free-form surface prism 20.

The lens 76 is bonded on the outer side of the second surface S2 of the free-form surface prism 20 so that the light from the display 14, which is emitted from the second surface S2 of the free-form surface prism 20, is emitted into the user's eye through the lens 76. The light passing through the lens 76 is refracted at the time of passing therethrough, and is changed such that the image displayed on the display 14 is enlarged. That is, with use of the lens 76, it is possible to enlarge the image projected from the free-form surface prism 20 and displayed on the display 14 to an appropriate size, and possible to project the same into the user's eye.

Further, in this embodiment, the case 10 includes the eyesight adjustment knobs 12 for adjusting eyesight and the prism position adjustment knob 13 for adjusting the positions of the free-form surface prisms 20. However, it is not necessary to provide those components, and hence it is possible to adopt a structure without those components.

Further, description has been made in this embodiment on the premise that the eyeglasses 100 to which the head mount display 1 is attached are eyeglasses having the bridge 105. However, this should not be construed restrictively. As illustrated in FIG. 10b, eyeglasses without the bridge 105 may be adopted. Further, instead of commercially available eyeglasses, it is possible to adopt eyeglasses dedicated for the head mount display 1. For example, it is possible to adopt eyeglasses incorporating earphones in the temples of the eyeglasses 100.

## Claims

1. A head mount display, which is used while being attached to an attachment member having an eyeglass shape, comprising:
a display means for displaying an image; and
a light guide means for guiding the image displayed by the display means and enlarged by a predetermined magnification to an eye of a user,
wherein, the display means and the light guide means are connected to each other while aligning in a lateral direction as seen from the user wearing the attachment member.

2. Ahead mount display according to claim 1, wherein the display means is attached between positions corresponding to those of eyeglass lenses of the attachment member.

3. A head mount display according to claim 1, wherein, the display means is attached to the attachment member so as to be situated on a side of the user with respect to the attachment member when the user wears the attachment member.

4. A head mount display according to claim 1, wherein the light guide means comprises a free-form surface prism in which the image is reflected therein by a predetermined number of times so as to be guided to the eye of the user.

5. A head mount display according to claim 1, wherein the light guide means comprises:
a light guide path for reflecting the image by a predetermined number of times and guiding the same; and
a lens for enlarging the image.

6. A head mount display according to claim 1, further comprising a movement mechanism for sliding the display means and the light guide means between end pieces and the bridge of the attachment member,
wherein a position of the image output from the light guide means is variable.

7. A head mount display according to claim 6, wherein:
the movement mechanism comprises:
a rack having one end connected to the display means; and
a pinion capable of being manipulated by the user; and rotation of the pinion causes the rack to be slid so as to slide the display means and the light guide means.

8. A head mount display according to claim 1, further comprising an adjustment mechanism for enabling the display means to move in a direction of the light guide means.

9. A head mount display, comprising:
a display means for displaying an image;
a light guide means for guiding the image displayed by the display means and enlarged by a predetermined magnification to an eye of a user; and
an attachment member having an eyeglass shape, wherein:
the display means is attached between positions corresponding to those of eyeglass lenses of the attachment member; and
the display means and the light guide means are connected to each other while aligning in a lateral direction as seen from the user wearing the attachment member.
